# EUROPEAN PATENT SPECIFICATION

(11) **EP 3 618 661 B1**
(45) Date of publication and mention of the grant of the patent: **06.09.2023**
(21) Application number: 18795127.2
(22) Date of filing: 07.05.2018
(51) Int. Cl.: A43D 8/22, A43B 3/12, A43B 13/12, B05D 5/06, A43B 23/02

(54) **PROCESS OF ORNAMENTATION OF ELASTIC ELEMENT FOR FOOTWEAR, AND FOOTWEAR ARTICLE**
VERFAHREN ZUR VERZIERUNG EINES ELASTISCHEN ELEMENTS FÜR SCHUHWERK UND SCHUHARTIKEL
PROCÉDÉ D'ORNEMENTATION D'UN ÉLÉMENT ÉLASTIQUE DESTINÉ À UNE CHAUSSURE, ET ARTICLE CHAUSSANT

(30) Priority: 05.05.2017 HK 17104557; 09.06.2017 HK 17105741
(43) Date of publication of application: 11.03.2020
(73) Proprietor: Fu, David, Hong Kong SAR (CN)
(72) Inventor: Fu, David, Hong Kong SAR (CN)
(74) Representative: Taylor, Gail
(86) International application number: PCT/CN2018/085805
(87) International publication number: WO 2018/202196

(56) References cited:
- WO-A1-2016/115540
- AU-A4- 2010 101 156
- CN-U- 201 813 922
- FR-A3- 2 733 880
- GB-A- 2 512 142
- US-A- 5 393 372
- US-A1- 2004 088 889
- US-A1- 2004 088 889
- US-A1- 2006 230 643
- US-A1- 2007 231 491
- US-A1- 2013 047 468
- US-A1- 2014 096 411

## Description

### Technical Field

The present invention relates to a process of applying ornamentation to an elastic element for footwear and an elastic element having an ornamentation applied thereto.

### Background of the Invention

Footwear articles have an engagement member for affixing a footwear article to the foot of a user of such a footwear article. For substantially closed footwear, the foot engagement element is typically what is known in the art as being an "upper" which typically at least partially encapsulate the foot of a user. These uppers often extend about the periphery of a sole of a footwear article, and are affixed to the foot of a user by way of a securement element such as laces, straps, electric, Velcro or other elements to secure the footwear article to the foot of a user.

For other types of footwear articles, such as sandals, a strap type device is provided as an engagement element, which effectively ties the sole member of a footwear article to the foot of a user, and such an element may include an adjustable element to provide for adaptation to different foot sizes, and also may allow for ease of removal and affixation to the foot.

In relation to other footwear article such a "flip-flop" type footwear articles, otherwise known as "thongs" or "jandals" or "Zo̅ri" (Zori), comprise a flexible sole member which is typically formed from a rubber type material or an expanded polymeric foam, and an engagement element which is provided as a strap formed from a rubber type material which extends from the sole between the toes of a user, and which typically incudes diverging arm portions which extend over the foot of a user and which are engaged with the sole member. Such engagement elements are elongate and very flexible, and allow for flexing of the foot and large amounts of flexing of the sole member, whilst maintaining the footwear article affixed to the foot of a user.

It is known within the art, branding and ornamentation may be applied to the engagement element of a footwear article, for purposes such as identification and creating aesthetic appeal to users and design character.

Furthermore, it is known that branding insignia, indicia, logos and ornamentation elements have been applied to the engagement by adhesion of ornamentation elements such as decorative ornamental elements such as beads, diamantes and the like.

Other manners in which branding insignia, indicia, logos and ornamentation elements may be applied to the engagement member of footwear articles include glues, pressure sensitive adhesives, paints or stickers.

Another manner in which ornamentation may be also applied to such an engagement member is by mechanical means. Such mechanical means include, by way of examples, as pinned buckle, a bolt and nut assembly extending through the engagement member, or rivets extending through the engagement member which may be ornaments in their own right of be utilised to affix other ornamentation elements to the engagement member.

Another manner in which branding insignia, indicia, logos and ornamentation elements may be applied to the engagement member of footwear articles include whereby a material, fabric, polymeric file or sheet, or the like, is wrapped about the engagement member and then joined so as to form a sheath which substantially encapsulates the main elongate portions of the engagement member, so as to provide a covering thereon. For commercial and functional reasons, integrity of application of ornamentation element and branding elements is paramount in manufacturing, packaging and use.

US20130047468 (to Everett-Weber et al.) discloses a footwear article with arch support and cushioning. The footwear article may be in the form of a sandal, such as a thong sandal or flip-flop, and the top portion of the sole may include design elements.

### Object of the Invention

It is an object of the present invention to provide an elastic element for footwear article, which overcomes or ameliorates at least some of the deficiencies as associated with the prior art.

### Summary of the Invention

The invention relates to an elongate foot engagement element for a flip flop footwear article as specified in appended independent claim 1 and to a method of providing an elongate foot engagement element as specified in appended independent claim 9. Additional embodiments of the invention are disclosed in the dependent claims.

In a first aspect, the present invention provides an elongate foot engagement element for a flip-flop footwear article, said foot engagement element having an outer surface with a transfer pattern applied thereto, said foot engagement element comprising two elongate portions each having a first surface for engagement with at least the upper surface of the foot of a user, and a second surface opposed to the first surface, and wherein the two elongate portions have a first end each of which converge at a first end of the foot engagement element, and wherein the elongate portions diverge at a second end thereof; wherein said foot engagement element is formed from an elastic polymeric or rubberized material having elastic properties and is deformable and flexurally resilient so as to return to an initial state upon being flexed, and wherein the foot engagement element is a shape-formed element having been formed in the shape of the foot engagement element and has said elastic properties, and where the transfer pattern of the first aspect of the invention may be a hydrographics immersion printing pattern covering the entire foot engagement element.

The foot engagement element of the present embodiment preferably comprises an extension portion extending from the first ends of the elongate portions and having an engagement portion thereon for engagement with a sole member of a footwear article, and the second ends of elongate portions each having an engagement portion thereon for engagement with a sole member of a footwear article.

Preferably, the extension portion is sized to as to pass between the big toe and the second toe of a user, and wherein the elongate portions are sized so as to extend from the first ends thereof and over the upper surface of the foot of a user in a direction towards the rear of the foot of the user, and a first and second elongate portion extending towards the lateral and medial sides of the foot of the user respectively.

The foot engagement element is preferably formed from an elastic material including a rubber or rubber compound, an elastomer, elastic polymer or the like.

A flip-flop footwear article can be provided comprising an elongate foot engagement element and an elongate sole member of a flip flop.

In one embodiment, the sole member includes an upper surface, a lower surface, an upper layer being for direct contact and interaction with at least a portion of the underside of the foot of the person and being formed from a first polymeric material having a first density, and a lower layer having a side wall and forming substantially the entire lower surface and being for direct contact and interaction with a surface and being formed from a second polymeric material having a second density, wherein the first polymeric material is provided in a gel form and the second polymeric material is provided in an expanded form whereby the first density is greater than the second density.

The first polymeric material and the second polymeric material may be selected and the upper layer and the lower layer are sized and arranged such that the sole is substantially flexible and elastic so as to allow for substantial flexion of the sole longitudinally and return, when in use and during ambulation of the person; and wherein said upper layer portion extends at least to the upper surface of the sole member, and the first polymeric material and the second polymeric material are selected and the upper layer and lower are sized and arranged such that and upper provides for dampening of load imparted to the foot of the person upon contact with the surface.

Preferably, the transfer pattern extends around the side wall of the lower layer and extends across the lower surface of the sole member. The transfer pattern may further extend from the side wall of the lower layer and between the lower layer and the upper layer. The transfer pattern of the lower layer may be a hydrographics immersion printing pattern, a thermally transfer printed pattern, or a rotary printing transferred pattern.

In another aspect, the present invention provides a method of providing an elongate foot engagement element for a flip-flop footwear article having a transfer pattern applied thereto, said method including the steps of:
(i) providing an elongate foot engagement element having an outer surface wherein said elongate foot engagement element is formed from an elastic polymeric or rubberized material and comprises two elongate portions each having a first surface for engagement with at least the upper surface of the foot of a user, and a second surface opposed to the first surface, wherein the two elongate portions have a first end each of which converge at a first end of the foot engagement element, and wherein the elongate portions diverge at a second end thereof, wherein said foot engagement element is formed from a polymeric material having elastic properties and is deformable and flexurally resilient so as to return to an initial state upon being flexed and wherein the foot engagement element is a shape-formed element having been formed in the shape of the foot engagement element and has said elastic properties; and
(ii) applying a pattern to said outer surface of said foot engagement element by way of a hydrographics immersion printing pattern transfer process, wherein the transfer pattern is a hydrographics immersion pattern covering the entire foot engagement element.

According to the method, the foot engagement element may be formed by a molding process, where the molding process is an injection molding process, a compression molding process, a cast molding process, a transfer molding process; or the foot engagement element may be formed by an additive manufacturing process, a three-dimensional (3D) printing process, a fused filament fabrication process, a Continuous Liquid Interface Production (CLIP) process, or a Digital Light Synthesised (DLS) process..

### Brief Description of the Drawings

In order that a more precise understanding of the above-recited invention can be obtained, a more particular description of the invention briefly described above will be rendered by reference to specific embodiments thereof that are illustrated in the appended drawings.

The drawings presented herein may not be drawn to scale and any reference to dimensions in the drawings or the following description is specific to the embodiments disclosed.

Any variations of these dimensions that will allow the subject invention to function for its intended purpose are within the scope of the subject invention. Thus, understanding that these drawings depict only typical embodiments of the invention and are not therefore to be considered as limiting in scope, the invention will be described and explained with additional specificity and detail through the use of the accompanying drawings in which:
Figure 1a depicts a top view of first exemplary embodiment of a foot engagement element in accordance with the present invention in a planar and non-erect configuration;
Figure 1b depicts a bottom view of the embodiment of the foot engagement element of Figure 1a in a in a planar and non-erect configuration;
Figure 1c depicts a perspective view of the embodiment of the foot engagement element as shown in Figure 1a and Figure 1b, in a non-planar and erect configuration;
Figure 2a depicts a top perspective view of an embodiment of a footwear article in accordance with the present invention including the foot engagement element of Figures 1a to Figure 1c;
Figure 2b depicts a top view of the embodiment of the footwear article of Figure 2a;
Figure 2c depicts a bottom view of the embodiment of the footwear article of Figure 2a and Figure 2b;
Figure 2d depicts the foot engagement element of Figures 1a to 1c in a bent or folded configuration;
Figure 3a depicts a top perspective view of a second embodiment of a footwear article in accordance with the present invention including the foot engagement element;
Figure 3b depicts a bottom view of the embodiment of the footwear article of Figure 3a;
Figure 4a depicts a top perspective view of a third embodiment of a footwear article in accordance with the present invention including the foot engagement element;
Figure 4b depicts a bottom view of the embodiment of the footwear article of Figure 4a;
Figure 5a depicts a top perspective view of a fourth embodiment of a footwear article in accordance with the present invention including the foot engagement element;
Figure 5b depicts a bottom view of the embodiment of the footwear article of Figure 5a;
Figure 6a depicts a top perspective view of another embodiment of a footwear article in accordance with the present invention including the foot engagement element;
Figure 6b depicts a bottom view of the embodiment of the footwear article of Figure 6a;
Figure 7a depicts a top perspective view of a further embodiment of a footwear article in accordance with the present invention including the foot engagement element;
Figure 7b depicts a bottom view of the embodiment of the footwear article of Figure 7a;
Figure 8a depicts a top perspective view of yet a further embodiment of a footwear article in accordance with the present invention including the foot engagement element;
Figure 8b depicts a bottom view of the embodiment of the footwear article of Figure 8a,
Figure 8c depicts a bottom view of the embodiment of the footwear article of Figure 8a and 8b;
Figure 8d depicts a side view of the embodiment of the footwear article of Figure 8a, 8b and 8c in a longitudinally flexed state; and
Figure 8e depicts a side perspective view of Figure 8a, 8b 8c and 8d in a longitudinally flexed state.

### Detailed Description of the Preferred Embodiments

The present invention relates to a process of applying ornamentation to an elastic element of a footwear article, in particular to a foot engagement element, and elastic elements for footwear articles having an ornamentation applied thereto.

More particularly, the present invention in preferred embodiments, relates to flip flop type footwear, and in particular the foot engagement element and application of ornamentation thereto. Such footwear articles are termed different names in different parts of the world, including terms such as "flip flop", "thongs", "jandals" and "Zo̅ri" (Zori) under the worldwide harmonized tariff system. As will be understood by those skilled in the art, a flip-flop type footwear article is extremely flexible so as to allow for continual flexing during walking or ambulation of a person, and the above terms may be used interchangedly.

The sole of such a footwear article is distinctly different from that of traditional footwear articles, whereby a comparatively small amount of flexion is allowable and typically at one portion of the sole, in comparison with that as required and provided by flip-flop type footwear articles. Furthermore, and in addition to the sole member of a flip-flop footwear article being required to be flexurally resilient, it is imperative that the foot engagement element also allows for such large flexing, whilst retaining the sole and hence the footwear article to the foot of the user during use, otherwise the integrity of the foot engagement element may be compromised.

As such, a foot engagement element of a flip-flop type footwear article has substantially larger deformation requirements than other foot engagement elements such as uppers on conventional footwear articles, sandals and the like.

An engagement element of the present invention such as a flip flop strap of the present invention, is subjected to extreme deformation as opposed to other shoe or footwear engagement elements. Such engagement elements are typically hyper elastic, and are required to bend, stretch and twist during normal usage.

Ornamentation applied to such a foot engagement element must also withstand such extreme deformation, as well as maintain integrity in harsh environmental conditions that foot engagement elements of the type typically applied to flip flops are exposed to, including heat, UV light, water and the like.

It has been found that indicia, and logos and ornamentation elements which are applied to engagement elements of such footwear articles, for example include glues and pressure sensitive adhesives, cannot be maintained on the foot engagement element, and delaminate and ultimately fall off the foot engagement element.

It has also been found that paints or stickers cannot be maintained on such foot engagement elements, and delamination inevitably occurs.

Delamination can result in unsightliness of the footwear bearing such a foot engagement element, and detract from future sales or acquisition of such footwear.

Furthermore, such delamination can result in footwear being prematurely discarded, when the sole portion of the footwear is still in operable condition due to unsightliness of the footwear article due to such delamination.

Other manners which ornamentation including indicia may be applied to foot engagement elements includes co-molding of materials, which is a complex and expensive process, and introduces labour and processing costs.

Other manners of providing branding insignia, indicia, logos and ornamentation elements such as the application of a sheath which substantially encapsulates the main elongate portions of the engagement member, are not readily bonded to the main elongate portions and may slip and wear, and can cause friction and discomfort to a user. Further, such ornamentation sheaths can fail and cause an otherwise serviceable footwear article to be discarded due to unsightliness. Still further, the application of such a sheath causes increased labour and production time and production inefficiencies.

According, the present inventor has sought to address the problems of the prior art in applying ornamentation to the foot engagement element of such a footwear article, and has unexpectedly found that by providing a highly flexible elasticized foot engagement and subsequently utilizing a transfer printing process to such a foot engagement element, that a transfer pattern may be applied permanently to such a highly flexible foot engagement element, which:
(i) maintains integrity during the extreme flexing of the element;
(ii) is resistive to UV degradation and water environment, including salt/saline water;
(iii) provides design flexibility;
(iv) obviates co-molding type processes;
(v) obviates the use of manual labour in ornamentation application, such as assembly of elements and affixing ornamentation element whereby such affixation may be effected by adhesive or mechanical means;
(vi) allows post-manufacturing application of an ornamental patters such that a standard and same foot engagement element may be used for any patterned article;
(vii) reduces inventory and variety thereof, and provides for order-specific design flexibility;
(viii) provides for increased cost effectiveness of products;
(ix) the entire element may be covered in the pattern, so as to be visible on the entire element when not in use, thus not having undesirable unsightliness of single sided ornamentation articles of the prior art; and
(x) provides for an article which is aesthetically pleasing to consumers.

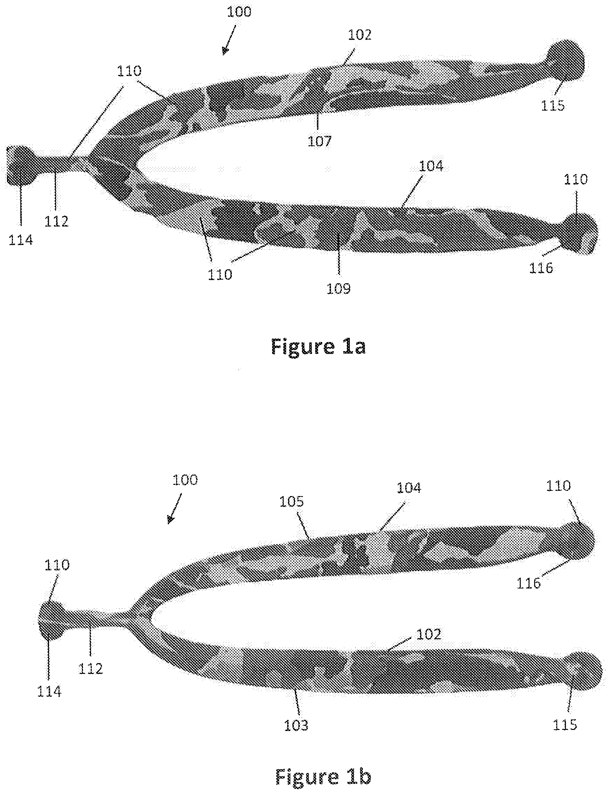

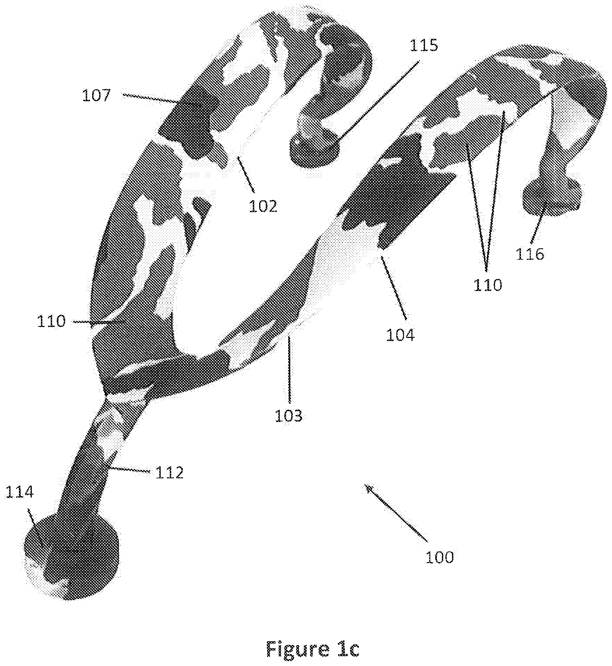

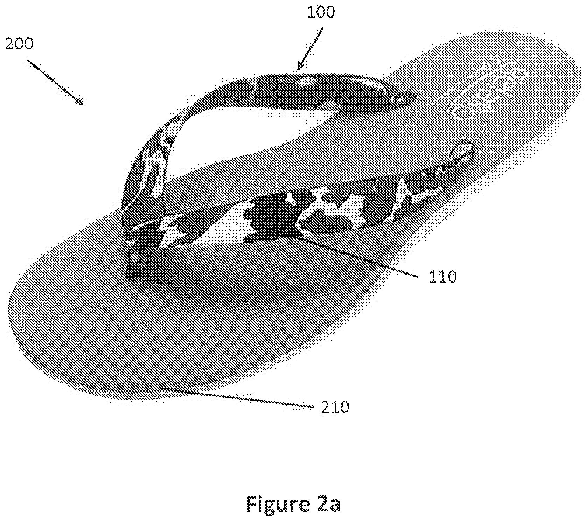

Referring to Figure 1a to Figure 1c and Figure 2a to Figure 2c, there is shown a first exemplary embodiment of a foot engagement element 100 in accordance with the present invention.

In the present embodiment, the foot engagement element 100 as depicted and described is a foot engagement element 100 suitable for engagement for use in a "flip-flop" footwear article 200, whereby the footwear article 200 includes a sole member 210 in conjunction with the foot engagement element 100.

Thus, the foot engagement element 100 is formed from an elastic polymeric or rubberized material, such that upon flexing of the foot engagement element 100 the foot engagement element 100 is elastically deformable and flexurally resilient so as to return to an initial state, and so as to maintain the foot of a user in engagement with the sole 210 of a footwear article 200 to which the foot engagement element 100 is utilised in conjunction therewith.

The foot engagement element of the present invention is a "shape-formed" element. A "shape-formed" element is defined as an element or an article which is formed from a material which is provided in a flowable form which, upon setting or hardening takes the requisite form of the article or element.

Accordingly, a "shape-formed" article or element is not cut, machined or worked from a solid material, but rather is an article or element which has been formed from a material provided in a flowable form. Examples of shape-forming processes including molding processes and additive manufacturing processes.

Thus, the foot engagement element 100 of the present invention, accordingly, is formed from a flowable and settable polymeric material, and wherein upon setting said polymeric material forms the shape of the foot engagement element and has said elastic properties, which may be selected from the group including a rubber or rubber compound, an elastomer, elastic polymer or the like.

As will be appreciated by those skilled in the art, other elastic or polymeric materials may also be utilised for the formation of the foot engagement element 100 in other and alternate embodiments of the invention.

Such a foot engagement element 100 of the present invention may be formed from a molding process, such as an injection molding process or other molding processes including a compression molding process, a casting molding process, a transfer molding process or the like.

Alternatively, the foot engagement element 100 of the present invention may be formed by way of an additive manufacturing process including a three-dimensional (3D) printing process, a fused filament fabrication process, a Continuous Liquid Interface Production (CLIP) process, a Digital Light Synthesis (DLS) process or the like.

The foot engagement element 100 as shown includes a first elongate portion 102 and a second elongate portion 104. The first elongate portion 102 and a second elongate portion 104 elongate portion have first surfaces 103 and 105 respectively for engagement with at least the upper surface of the foot of a user.

Such first surfaces 103 and 105 typically are provided as a smooth surface for contact and engagement with the upper surface of the foot of a user. Alternatively, first surfaces 103 and 105 may be provided with a texture. The foot engagement element 100 has a second surface 107 and 109 opposed to the first surface 107 and 109 respectively.

The foot engagement element 100 includes two elongate portions 102 and 104 which converge at a first end of the foot engagement element 100, and wherein the elongate portions 102 and 104 diverge from each other at the other end.

Preferably, an extension portion 112 extends from the first ends of the elongate portions 102 and 104, and has an engagement portion 114 thereon for engagement with the sole member 210 of the footwear article 200, wherein in the present embodiment such an engagement portion 114 is provided as a plug element as is used in foot engagement elements 100 as applicable for use in a flip-flip type footwear article.

At second ends of elongate portions 102 and 104 there can also be provided engagement portion 115 and 116 respectively, again in the present embodiment being provided as a plug element as used in a typical flip-flop type footwear article.

As will be understood by those skilled in the art, the extension portion 112 is sized to as to pass between the big toe and second toe of a user, and the elongate portions 102 and 114 are sized to extend from the first ends thereof and over the upper surface of the foot of a user in a direction towards the rear of the foot of the user, such that the foot engagement element 100 is a bifurcated engagement element for use in affixing a flip-flop footwear article to the foot of a user.

As is shown, the foot engagement element 100 includes a pattern 110 applied as an ornamentation to the foot engagement element 100, which in the present embodiment is provided as a camouflage type pattern of multi-colours and of an irregular appearance.

As also is shown, the pattern 110 is applied to the entire foot engagement element 100, including the first surfaces 103, 105 and the second surfaces 102, 104 of the foot engagement element 100, the extension portion 112, the engagement portions 114, 115 and 116.

The transfer pattern 110 as applied to the foot engagement element 100, is applied to the article by way of a hydrographics immersion printing process, also which may also be termed a water transfer process as well as other terms as recited below, which will be readily understood by those skilled in the art to be synonymous with hydrographics immersion and each other.

There are numerous variations of hydrographics immersion printing within the art, which with appropriate adaptation, may be implemented in accordance with the present invention.

Such a hydrographics immersion printing process of the present embodiment allows the transfer pattern 110 to be provided to a pre-formed foot engagement element 100 after the foot engagement element 100 has been fabricated and as such, advantageously the same stock foot engagement elements may be utilised irrespective of the transfer pattern to be applied. This is a significant advantage over the prior art in that there is no necessity to have different types of foot engagement elements, and reduces inventory and variety thereof, and provides for order-specific design flexibility.

Accordingly, the present invention, in addition to the advantages as recited above and below, the use of a pattern transfer process as provided by the present invention obviates complex and costly manufacturing steps and process, as well as reduces inventory variance and hence inventory numbers, in comparison with the prior art, in addition to design flexibility.

As will be understood by those skilled in the art, although an irregular pattern is used in the present embodiment which is applied by way of a hydrographics immersion printing process, other transfer patterns may be utilised which may be regular, semi-regular, semi-irregular and combinations thereof, as well as multiple colours, shades, colour intensities and the like, and also with other pattern transfer processes.

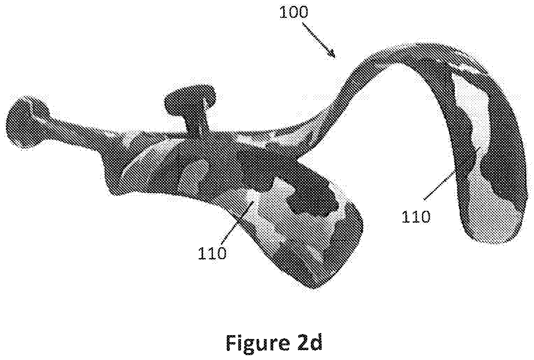

Referring to Figure 2d, there is depicted the foot engagement element 100 of Figure 1a to Figure 2c in a bent or folded configuration. As is shown the foot engagement element 100 is in a hyper-flexed and bend and twisted state. The present inventor has found that applying a transfer pattern by way of a pattern transfer process, such as a hydrographics immersion printing process in the present embodiment, to a foot engagement element 100, when flexed excessively, does not result in delamination, de-bonding, flaking or interface failure of the ornamental pattern at all, and the integrity between the foot engagement element 100 and transfer pattern 110 applied thereto is maintained throughout normal use and also throughout excessive use including excessive folding, bending, twisting, stretch and combinations thereof of such deformation.

Surprisingly and unexpectedly, the utilization of a pattern transfer process, such as a hydrographics immersion printing the present embodiment, to apply a pattern to a highly flexible element such as foot engagement element of the present invention, has provided a foot engagement element having ornamentation and patterning with longevity and flex-resistance to damage which cannot be provided by the processes and products of the prior art, and provides a superior product from, aesthetic, manufacturing and functional standpoint.

Furthermore, by providing total pattern 110 coverage to the foot engagement element 100 as shown in the present embodiment, provides for enhanced aesthetic appeal, and provides footwear article 200 which, in combination with the foot engagement element, provides yet further distinguishing aesthetic appeal from both sales and usage standpoints.

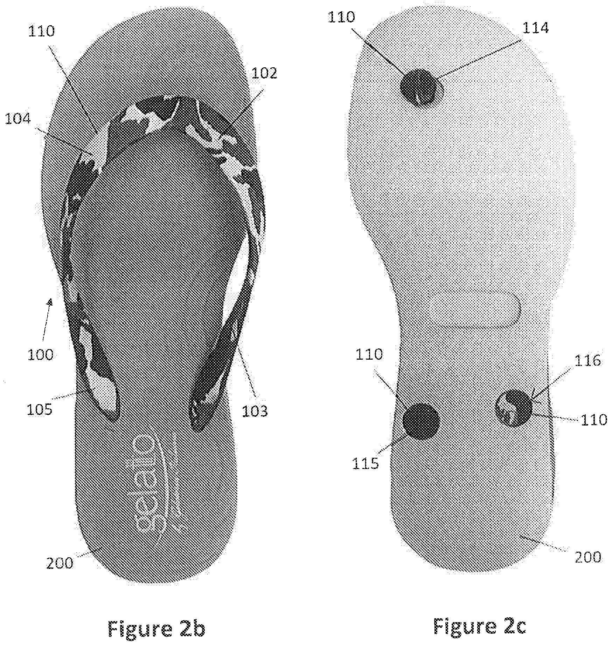

Again, referring Figure 2b whereby the footwear article 200 is viewed from above and in a manner which the footwear article 200 may be displayed for sale, a consumer can see the transfer pattern 110 on both the first surfaces 103, 105 and the second surfaces 102, 104, when not in use. This provides a much more aesthetically pleasing article in comparison with articles of the prior art which only exhibit a transfer pattern on the second surface.

Although articles of the prior art having a transfer pattern only on the second or outer surface may look somewhat aesthetically pleasing when being worn, such articles lack the aesthetic appeal of the present invention when not being worn or when offered for sale due to the absence of a pattern on the inner or first surface which abuts the upper surface of the foot of a user. Furthermore, single outer surface patterns of footwear of the prior art do not sufficiently wrap around the edge from the second surface to the first surface, and the absence of pattern is aesthetically displeasing, in addition to the functional advantages as recited above and below.

Still further and referring to Figure 2b, the extension portion 112 of the foot engagement element 100 is fully covered by transfer pattern 110, which gives increased aesthetic appeal both when offered for sale to consumers, as well as when in use by a user, and again in addition to the functional advantages as recited above.

Now referring to Figure 2c, the aesthetic appeal of the footwear article 200 embodying the foot engagement element 110 of the present invention is further exemplified, both from a market and sales standpoint, as well as when in use. As is shown the engagement portions 114, 115 and 116 all embody the pattern 110 which, when the footwear article is viewed from below when offered for sale, affords an enhanced pattern contract with the underside of the footwear article 200 and whereby the consumer inherently observes the correlation of the pattern as being the same type on the engagement portions 114, 115 and 116as applied to the foot engagement element 110 when viewed from above the footwear article 200, giving an enhanced design effect and again in addition to the functional advantages as recited above.

Further, the engagement portions 114, 115 and 116, having the same pattern as seen from above on the foot engagement element 110, can be seen at times during ambulation, catching the attention of others and creating a subject of conversation, and thus contributing to market awareness and enhancement, and sales point enquiries.

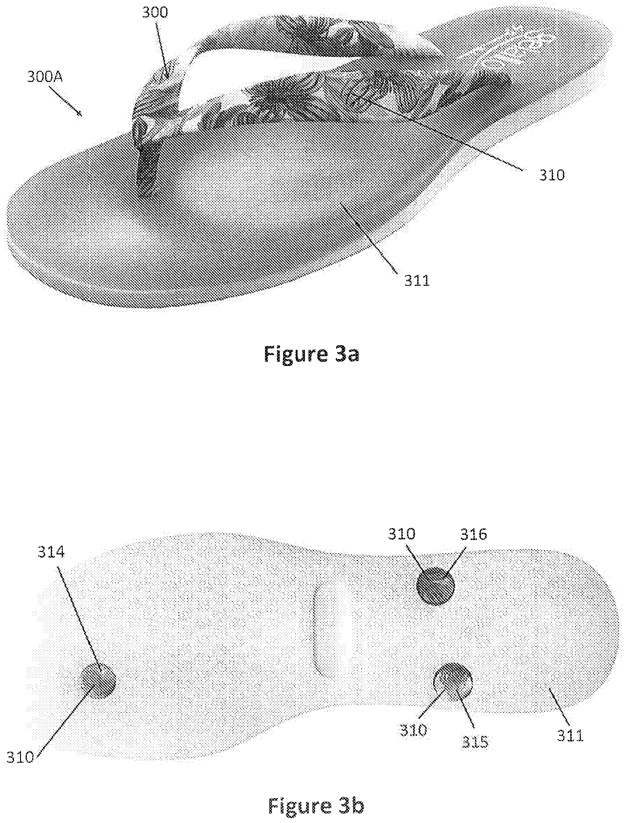

Referring to Figure 3a and 3b, there is a depicted a second embodiment of a footwear article 300A in accordance with the present invention including a foot engagement element 300 and a sole member 311. The foot engagement element 300 includes engagement portions 314, 315 and 316 which engage the foot engagement element 300 with the sole member 311 whereby the foot engagement element 300 extends through the sole member 311.

In the present embodiment, the transfer pattern 310 is applied by way of a hydrographics immersion printing process, and the pattern comprises a floral arrangement distribution. The present embodiment includes the functional and aesthetic features as recited above in relation to the first embodiment, including a transfer pattern 310 covering the entire foot engagement element, and being viewable on both surfaces of the foot engagement element 300, and being viewable from below on the engagement portions 314, 315 and 316, providing functional, aesthetic and commercial advantages as recited above in reference to the first embodiment.

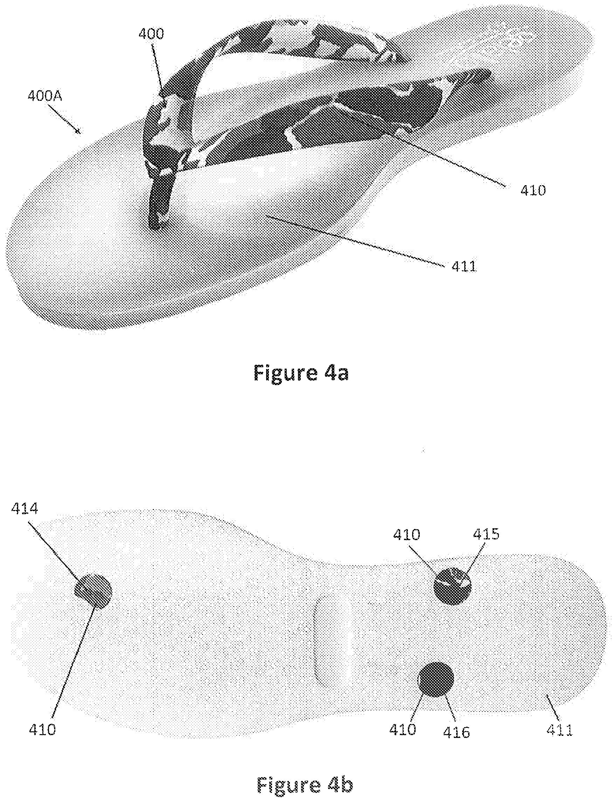

Referring to Figure 4a and 4b, there is a depicted a third embodiment of a footwear article 400A in accordance with the present invention including a foot engagement element 400 and a sole member 411. The foot engagement element 400 includes engagement portions 414, 415 and 416 which engage the foot engagement element 400 with the sole member 411 whereby the foot engagement element 400 extends through the sole member 411.

In the present embodiment, the transfer pattern 410 is applied by way of a hydrographics immersion printing process, and the pattern comprises an alternate camouflage pattern. The present embodiment includes the functional and aesthetic features as recited above in relation to the first embodiment, including a transfer pattern 410 covering the entire foot engagement element, and being viewable on both surfaces of the foot engagement element 400, and being viewable from below on the engagement portions 414, 415 and 416, providing functional, aesthetic and commercial advantages as recited above in reference to the first embodiment.

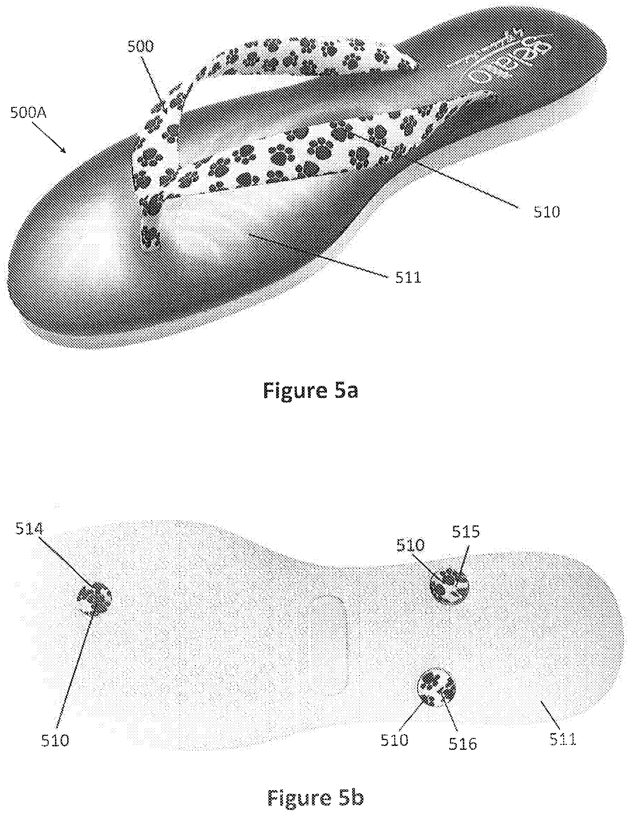

Referring to Figure 5a and 5b, there is a depicted a fourth embodiment of a footwear article 500A in accordance with the present invention including a foot engagement element 500 and a sole member 511. The foot engagement element 500 includes engagement portions 514, 515 and 516 which engage the foot engagement element 500 with the sole member 511 whereby the foot engagement element 500 extends through the sole member 511.

In the present embodiment, the transfer pattern 510 is applied by way of a hydrographics immersion printing process, and the pattern comprises a dog footprint pattern arrangement. The present embodiment includes the functional and aesthetic features as recited above in relation to the first embodiment, including a transfer pattern 510 covering the entire foot engagement element, and being viewable on both surfaces of the foot engagement element 500, and being viewable from below on the engagement portions 514, 515 and 516, providing functional, aesthetic and commercial advantages as recited above in reference to the first embodiment.

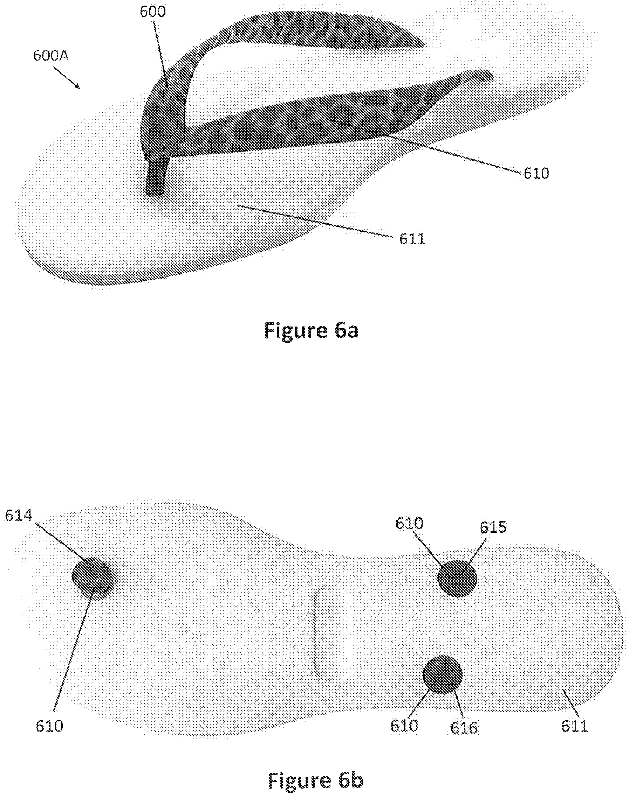

Referring to Figure 6a and 6b, there is a depicted a fifth embodiment of a footwear article 600A in accordance with the present invention including a foot engagement element 600 and a sole member 611. The foot engagement element 600 includes engagement portions 614, 615 and 616 which engage the foot engagement element 600 with the sole member 611 whereby the foot engagement element 600 extends through the sole member 611.

In the present embodiment, the transfer pattern 610 is applied by way of a hydrographics immersion printing process, and the pattern comprises a leopard fur print. The present embodiment includes the functional and aesthetic features as recited above in relation to the first embodiment, including a transfer pattern 610 covering the entire foot engagement element, and being viewable on both surfaces of the foot engagement element 600, and being viewable from below on the engagement portions 614, 615 and 616, providing functional, aesthetic and commercial advantages as recited above in reference to the first embodiment.

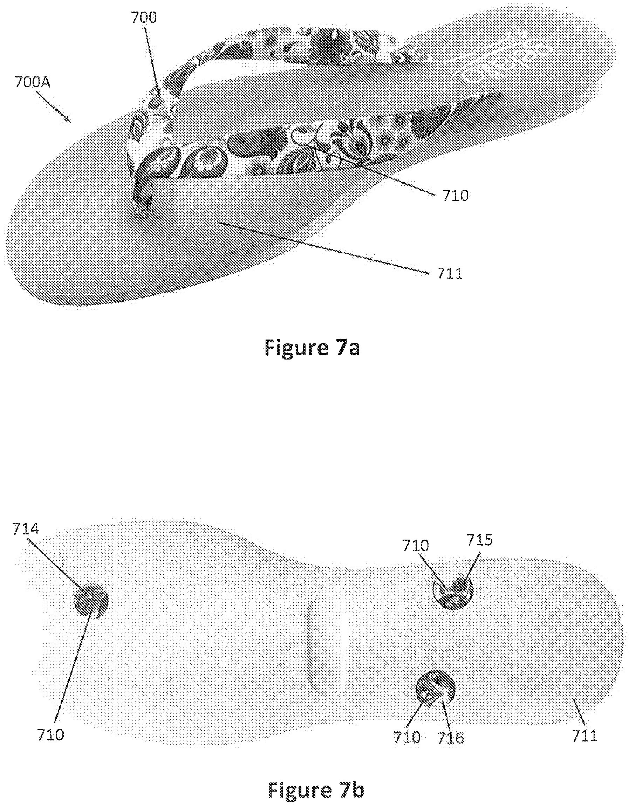

Referring to Figure 7a and 7b, there is a depicted a sixth embodiment of a footwear article 700A in accordance with the present invention including a foot engagement element 700 and a sole member 711. The foot engagement element 700 includes engagement portions 714, 715 and 716 which engage the foot engagement element 700 with the sole member 711 whereby the foot engagement element 700 extends through the sole member 711.

In the present embodiment, the transfer pattern 710 is applied by way of a hydrographics immersion printing process, and the pattern comprises a further floral pattern distribution. The present embodiment includes the functional and aesthetic features as recited above in relation to the first embodiment, including a transfer pattern 710 covering the entire foot engagement element, and being viewable on both surfaces of the foot engagement element 700, and being viewable from below on the engagement portions 714, 715 and 716, providing functional, aesthetic and commercial advantages as recited above in reference to the first embodiment.

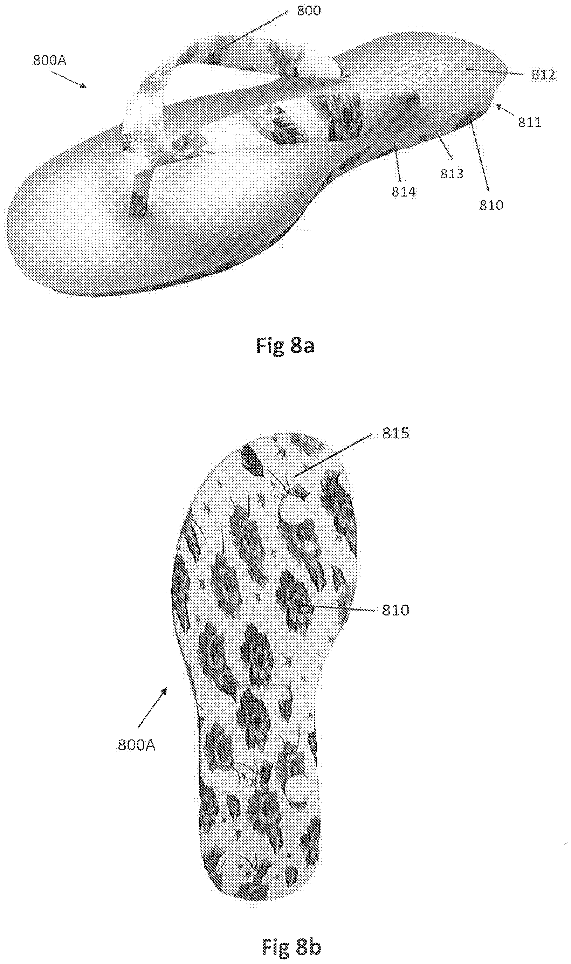

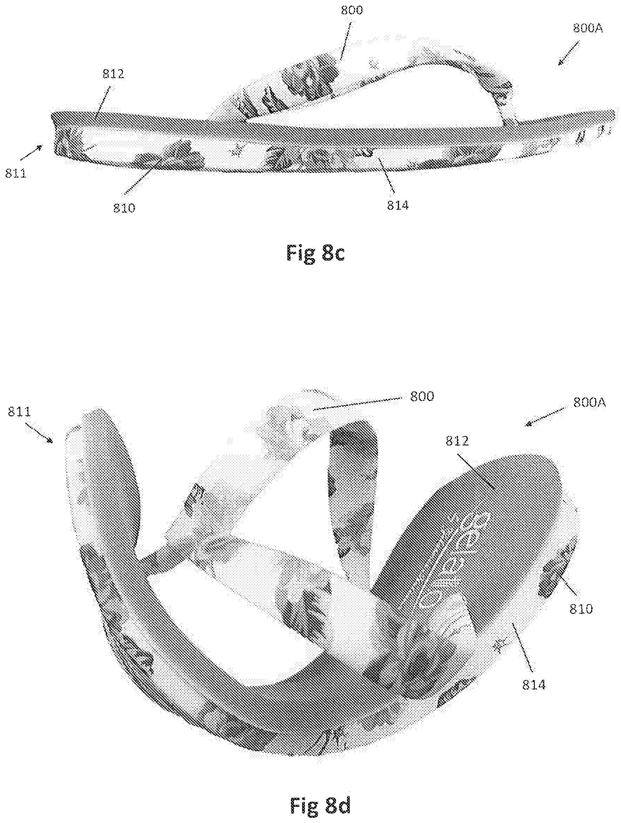

Now referring to Figures 8a to 8e, there is shown yet a further embodiment of a footwear article 800A in accordance with the present invention including a foot engagement element 800 and a sole member 811, whereby the foot engagement element 800 extends through the sole member 811.

The footwear article 800A is depicted as including a foot engagement element 800 similar to that as depicted and described above in respect of preceding embodiments.

The footwear article 800A is a "flip flop" type footwear article, otherwise known as "thongs" or "jandals" or "Zo̅ri" (Zori), which is highly flexible and highly elastic, and flexes substantially in use during ambulation and returned to a neutral position due to the elastic nature of the materials from which the sole member 811 is comprised of.

In the present embodiment, the sole member 811 is comprised of a lower layer 813 form from an expanded and an upper layer 812 formed from a gel type polymeric material. In conjunction, the lower layer 813 and the upper layer 812 cooperatively provide the requisite flexural and return mechanical properties for sole member 811 of a flip flop type footwear article as to which the present invention is directed.

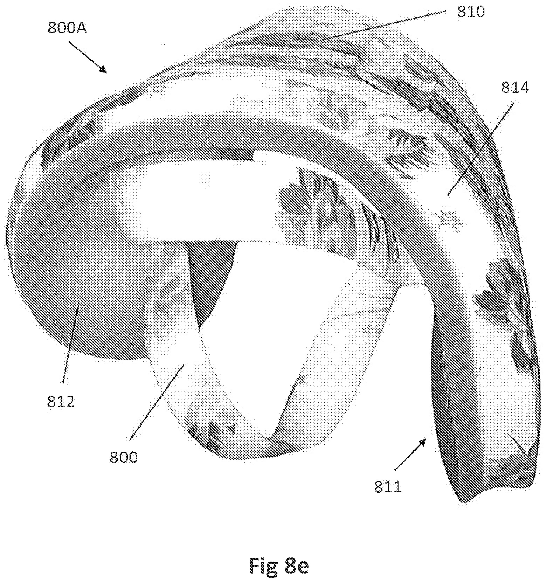

The present inventor has further found that applying a transfer pattern 810 by way of a pattern transfer process, such as a hydrographics immersion printing process similarly as described with reference to the foot engagement element of preceding embodiments as described, to a highly flexible sole member 810 such as a flip flop, which when flexed excessively as shown in Figure 8d and 8e, does not result in delamination, de-bonding, flaking or interface failure of the ornamental pattern 810 at all.

The integrity between the sole member 811 and transfer pattern 810 applied thereto is maintained throughout normal use and also throughout excessive use including excessive folding, bending, twisting, stretch and combinations thereof of such deformation.

In the present embodiment, the transfer pattern 810 extends around the side wall 814 of the sole member 811 to the underside 815 of the sole member 815, and covers the entire underside 815 of the sole member 811 of the footwear article 800A.

Surprisingly and unexpectedly, the utilization of a pattern transfer process, such as a hydrographics immersion printing the present embodiment, to apply a pattern to a highly flexible footwear element such as the sole member 811 of the footwear article 800A, has provided a sole member 811 having ornamentation and patterning with resistance to being compromised due to flexing.

Such a pattern 810 and ornamentation for a sole of a flip flop, due to the hyper elasticity of such a sole member 811, cannot be provided by the processes and products of the prior art, and the present invention provides a superior product from, aesthetic, manufacturing and functional standpoint.

Furthermore, by providing pattern 810 coverage to the sole member 811 as shown in the present embodiment, which extends from the side wall 814 and around to the underside 815 of the sole member 811, this provides for enhanced aesthetic appeal.

Further the provision of a pattern in the underside 815 of the sole member 811 attracts the attention of other people when the footwear article 800A is being worn by a user, as the provision of such a pattern on the underside of a footwear article such as a flip flop is unique and eye catching to other persons, including due to the flexible nature of such a footwear article.

Furthermore, as flip flop articles are typically offered for sale whereby the footwear article 800A can be handled and inspected by a potential purchaser, this provides enhanced market appeal from an aesthetic standpoint as the pattern 810 is readily viewable.

Still further, in an embodiment whereby there is provided a pattern 810 on both the sole footwear article 800A and on the foot engagement element 800, an enhanced optically and aesthetically pleasing product is provided, in particular when the pattern 810 on the sole member 811 and the foot engagement element 800 is same or similar, thus providing yet further distinguishing aesthetic appeal from both sales and usage standpoints.

In the present embodiment, the pattern 810 is applied to the lower layer 813 of the sole member 811, prior to the upper layer 812 being affixed to the lower layer 813, for example by way of an adhesive, adhesive film, heat and/or pressure activated adhesive of adhesive layer or the like.

Both the foot engagement element and the sole member as described above of flip flop are subject to extreme elastic deformation in comparison to footwear components of footwear of the prior art, and the present invention of application of a transfer pattern to a foot engagement element and a sole member of a flip flop is applicable to both flip flop components.

The physical and environmental loading conditions as required by a foot engagement element and a sole member of a flip flop, ornamentations of the prior art will de-attach or de-bond from such a foot engagement element and such a sole element of the present invention, for several reasons, including:
(a) ornamentations and labels de-bonding due the hyper-strain at the interface between an ornamentation and the foot engagement element and/or the sole element exceeding the bonding strength of the adhesives;
(b) water, in particular salt water, providing a hostile environment to adhesives used to secure ornamentation, as well as peeling off stickers and some paint types;
(c) UV degradation due to being in typical beach or boating environments that such footwear articles are often utilised at;
(d) materials from which the ornamentations and paint are made may fail or degrade; and
(e) in water, in particular salt water, mechanically affixed ornamentation elements of fixation devices or sole members, may oxidise, which has the detrimental effects including rust marks occurring on the foot engagement element, and failure due to excessive oxidation and rust, resulting in such ornaments or ornaments affixed by such means, de-attaching from the foot engagement element.

Referring to the foot engagement element of the present invention, other disadvantages of the methods and foot engagement devices of the prior art by which ornamentation elements are applied to footwear articles such as foot engagement elements, include difficulties, tediousness, time consumption and labour intensive activities in applying such ornamentation elements, thus it is costly to have a post-formation process whereby manual labour typically required to adhere the ornamentation elements or affix mechanically affixed ornamentation elements, and paints, stickers and co-molding techniques. By contrast, the foot engagement element of the present invention:
(i) maintains integrity during the extreme flexing of the foot engagement element;
(ii) is resistive to UV degradation and water environment, including salt/saline water;
(iii) provides design flexibility;
(iv) obviates co-molding type processes;
(v) obviates the use of manual labor in ornamentation application;
(vi) allows post-manufacturing application of an ornamental patterns such that a standard and same foot engagement element may be used for any patterned article;
(vii) provides for increased cost effectiveness of products;
(viii) the entire element is covered in the pattern, so as to be visible on the entire element when not in use, thus not having undesirable unsightliness of single sided ornamentation articles of the prior art; and
(ix) provides for an article which is aesthetically pleasing to consumers.

Accordingly, the foot engagement element of the present invention obviates numerous deficiencies present and associated with foot engagement elements of the prior art, as well as provides aesthetic advantages not afforded by the prior art, which enhance market appeal both prior to sale as well as after same, and also when in use by a consumer.

Referring to the sole member of a flip flop according to the present invention, advantages over the prior art include:
(i) maintains integrity of the ornamentation during the extreme flexing of the sole member;
(ii) is resistive to UV degradation and water environment, including salt/saline water, and environmental condition flip flops are often exposed to;
(iii) provides design flexibility;
(iv) obviates the use of manual labour in ornamentation application;
(v) provides for increased cost effectiveness of products;
(vi) provides for an article which is aesthetically pleasing to consumers, and attractive both at offer for sale and in actual use, with the pattern provided on the side wall and the underside of the sole member; and
(vii) when used in conjunction with the foot engagement element of the present invention, offers a further enhanced aesthetically pleasing article, and thus providing yet further distinguishing aesthetic appeal from both sales and usage standpoints.

Whilst the present invention is also applicable to flip flop sole members of single construct, such as an expanded polymeric foam construct, the embodiment of having two layers, and in particular a lower expanded polymeric foam layer and an upper polymeric gel layer, the present invention provides further advantages over the prior art as follows. Note, such advantages are also applicable to a multi-layered sole member of a flip flop irrespective of the materials from which the sole member is formed:
(i) there is a clean line of finish of the pattern at the interface between the lower layer and the upper layer,
(ii) as the pattern extends over the upper surface of the lower layer prior to affixing the upper layer thereto and wraps around from side wall of the sole member and over the upper surface of the lower layer and there inherently exists bonding of pattern around the peripheral interface, the is resistance to peeling and debonding of the transferred pattern from the sole member and the integrity of bonding between the sole member and the transferred pattern is maintained; and
(iii) there is increased manufacturing efficiency, as there is no necessity for masking of the upper layer prior to application of the transfer pattern, thus obviating a manufacturing step or process.

### Processes for Forming Foot Engagement Element as Applicable to the Present Invention

As stated above, the foot engagement element of the present invention, is a "shape-formed" element, meaning the element is formed from a material which is provided in a flowable form which, upon setting or hardening takes the requisite form of the article or element.

Accordingly, a "shape-formed" article or element is not cut, machined or worked from a solid material, but rather is an article or element which has been formed from a material provided in a flowable form. Examples of shape-forming processes including molding processes and additive manufacturing processes.

As stated above, a foot engagement element of the present invention may be formed from a molding process, such as an injection molding process or other molding processes including a compression molding process, a casting molding process, a transfer molding process or the like.
injection molding, as applicable to the present invention, typically utilises an injection molding machine, raw plastic material, and a requisite mold. In such a process, the requisite elastic material is injected into a mold cavity having the requisite shape for the foot engagement element in a flowable and moldable state. Examples of suitable moldable elastic materials include a rubber or rubber compound, an elastomer, elastic polymer or the like. Upon setting of the elastic material, the mold is opened and a foot engagement element removed from the mold.

Compression molding may also be implemented in other embodiments for forming the foot engagement element, whereby a moldable material is generally preheated, and is first placed in an open, heated mold cavity defining the shape and geometry of the requisite foot engagement element. The mold is then closed with a top force or plug member and pressure is applied to force the material into contact with all mold areas in the mold cavity while heat and pressure are maintained until the material has cured. Such a process typically employs thermosetting resins in a partially cured stage, either in the form of granules, putty-like masses, or preforms.

As will be appreciated and understood by those skilled in the art, other molding processes may be implemented, such as casting molding or transfer molding, and are also understood to fall within the ambit of applicable molding processes for forming a foot engagement element in accordance with the present invention.

Alternatively, the foot engagement element of the present invention may be formed by way of an additive manufacturing process including a three-dimensional (3D) printing process, a fused filament fabrication process, a Continuous Liquid Interface Production (CLIP) process, a Digital Light Synthesis (DLS) process or the like.

Different 3D printing processes may be utilised for forming the foot engagement element as a "shape formed" element, such as Fused filament fabrication.

In other and alternate embodiments, other additive manufacturing processes can be utilised to provide a "shape formed" foot engagement element, such as Continuous Liquid Interface Production (CLIP) process, whereby a continuous process commences with the provision of a pool of liquid photopolymer resin. A portion of the pool bottom is transparent to ultraviolet light, which is termed the "window". An ultraviolet light beam is utilised to shine through the window, illuminating the precise cross-section of the object, which light causes the resin to solidify. The object rises slowly enough to allow resin to flow under and maintain contact with the bottom of the object.

In other embodiments, a Digital Light Synthesis (DLS) process may be utilised to form the shape of the foot engagement element.

### Printing Processes as Applicable to the Present Invention

In reference to utilisation of a pattern transfer process as utilised in the present invention, those skilled in the art will understand that whilst such process have been used to decorate items such as bike helmets or other automotive trim, and films have applied to substrates including plastic, fiberglass, wood, ceramics, and metal, that it is novel to utilise water transfer printing to such highly flexible footwear elements including foot engagement elements and highly elastic and flexible sole members of the present invention, and unexpected and surprisingly that a pattern transferred to such a foot engagement element and to a sole member by way pattern transfer process, would be able to withstand the mechanical, environmental, usage and aesthetic requirements demanded and required by a such a foot engagement element and sole member, and that such a technology could even be applicable or suitable.

Furthermore, in view of the manners in which ornamentation has been applied to such foot engagement elements and sole members in the prior art, with adhesives, stickers, mechanical elements, there has not been motivation or suggestion to those skilled in the art in respect of the invention as derived by the present inventor.

As stated above different transfer processes may be implemented within the present invention, so as to provide the transfer pattern to the surface of the foot engagement element of the present invention, and the transfer pattern is a hydrographics immersion printed pattern.

Referring to the use of hydrographics immersion printing as a pattern transfer process to a foot engagement element of the present invention, those in the art will also understand that within the art, the technology and process of "hydrographics immersion printing" may also be termed "water transfer printing" and other such synonyms, and regardless of alternate terms being used, such pattern transfer principles are understood to fall within the scope of the present invention.

For background and reference, in relation to a hydrographics immersion printing, process, other terms utilised by way of example, include HydroGraphics, immersion printing, water transfer imaging, water transfer printing, hydro dipping or cubic printing and the like, all of which may be considered applicable as a method of applying printed designs to three-dimensional surfaces.

By way of example of hydrographics immersion printing, a pattern may be printed onto a Polyvinyl Alcoholic (PVA) film to form a hydrographic film, usually way of pigment-based inks, which are not soluble in water, which is used in the transfer process

The hydrographic film is then typically placed on a water surface, often at an elevated temperature of about 20 degrees to 32 degrees Celsius in a dipping tank, with the ink facing upwards and the film facing into the water. The clear film is water soluble, and dissolves, leaving only the pattern floating at the water surface.

An activator is typically required, which is a plasticizer dissolved in volatile solvent to soften the ink layer and allowing it to bond to an article to which the pattern is to be applied. Adhesion between the ink and the article is a result of the chemical components of the activator softening the base coat layer and allowing the ink to form a bond with it.

The article is slowly dipped into the dipping tank typically at an angle of 30-45 degrees to avoid air pockets occurring. The surface tension allows the pattern to curve around any shaped surface of an article. Any remaining residue may then rinsed off thoroughly, and the ink at that stage has already adhered to the article and will not wash off, and the article is then allowed to dry.

Other steps may include priming and base priming prior to dipping, and optionally clear coating post-dipping in some cases.

For the sole member, other pattern transfer processes may be utilised as the pattern transfer process in the present invention, such as a thermal transfer printing process, a rotary printing process or the like.

Thermal transfer printing may be implemented, which is a digital printing process in which material is applied to the sole member is effected by melting a coating of ribbon such that it is maintained as glued to the sole member on which the print is applied, in contrast with direct thermal printing where no ribbon is present in the process.

A rotary printing process may be implemented, whereby a rotary printing is provided which is a printing press in which the images to be printed are curved around a cylinder. Printing of the transfer pattern to the sole member may be effected by such a process.

Accordingly, the present invention obviates numerous deficiencies present and associated with foot engagement elements of the prior art, in particularly with reference to foot engagement elements as applicable to flip flops and highly flexible and elastic sole members of flip flops.

Although the term "flip flop" has been utilised with refence to embodiments of the invention as exemplified, as should be understood such footwear articles are termed different names in different parts of the world, including terms such as "flip flop", "thongs" , "jandals" and "Zo̅ri" (Zori) under the worldwide harmonized tariff system, and as will be understood by those skilled in the art, a flip-flop type footwear article is extremely flexible so as to allow for continual flexing during walking or ambulation of a person, and the above terms may be used interchangedly.

Furthermore, while the foot engagement element of the present invention has been explained by reference to foot engagement elements and sole members as applicable to "flip-flop" type footwear articles and embodiments are shown in combination with a sole member of a flip flop, however it should be appreciated that the invention can apply, whether with or without modification, to other footwear articles, such as sandal, slides and the like without loss of generality.

## Claims

1. An elongate foot engagement element (100) for a flip-flop footwear article (200), said foot engagement element having an outer surface with a transfer pattern (110) applied thereto, said foot engagement element (100) comprising:
two elongate portions (102, 104) each having a first surface (103, 105) for engagement with at least the upper surface (107, 109) of the foot of a user, and a second surface opposed to the first surface, and wherein the two elongate portions (102, 104) have a first end each of which converge at a first end of the foot engagement element (100), and wherein the elongate portions (102, 104) diverge at a second end thereof;
wherein said foot engagement element (100) is formed from an elastic polymeric or rubberized material having elastic properties and is deformable and flexurally resilient so as to return to an initial state upon being flexed, wherein the foot engagement element (100) is a shape-formed element having been formed in the shape of the foot engagement element (100) and has said elastic properties; and
wherein the transfer pattern (110) is a hydrographics immersion pattern (110) covering the entire foot engagement element (100).

2. An elongate foot engagement element (100) according to claim 1, further comprising an extension portion (112) extending from the first ends of the elongate portions (102, 104) and having an engagement portion (114) thereon for engagement with a sole member (210) of a footwear article (200), and the second ends of elongate portions (102, 104) each having an engagement portion (115, 116) thereon for engagement with a sole member (210) of a footwear article (200), wherein the extension portion (112) is sized to as to pass between the big toe and the second toe of a user of a user, and wherein the elongate portions 102, 104) are sized so as to extend from the first ends thereof and over the upper surface of the foot of a user in a direction towards the rear of the foot of the use, and a first and second elongate portion (102, 104) extending towards the lateral and medial sides of the foot of the user respectively.

3. An elongate foot engagement element (100) according to claim 1 or claim 2, wherein the foot engagement element is formed from an elastic material including a rubber or rubber compound, an elastomer, elastic polymer, polymeric resins or the like.

4. A flip-flop footwear article (200), comprising an elongate foot engagement element (100) of a footwear article (200) according to any one of claims 1 to 3 and an elongate sole member (210) of a flip flop.

5. A flip-flop footwear article (200) according to claim 4, wherein the elongate sole member (811) includes an upper surface, a lower surface (815), an upper layer (812) being for direct contact and interaction with at least a portion of the underside of the foot of the user and being formed from a first polymeric material having a first density, and a lower layer (813) having a side wall (814) and forming substantially the entire lower surface (815) and being for direct contact and interaction with a surface and being formed from a second polymeric material having a second density, wherein the first polymeric material is provided in a gel form and the second polymeric material is provided in an expanded form whereby the first density is greater than the second density, and wherein the first polymeric material and the second polymeric material are selected and the upper layer (812) and the lower layer (813) are sized and arranged such that the sole member (811) is substantially flexible and elastic so as to allow for substantial flexion of the sole member (811) longitudinally and return, when in use and during ambulation of the user; and wherein said upper layer (812) portion extends at least to the upper surface of the sole member (811), and the first polymeric material and the second polymeric material are selected and the upper layer (812) and lower layer (813) are sized and arranged such that and upper layer (812) provides for dampening of load imparted to the foot of the user upon contact with the surface.

6. A flip-flop footwear article (200) according to claim 5, having a transfer pattern which extends around the side wall of the lower layer and extends across the lower surface of the sole member.

7. A flip-flop footwear article (200) according to claim 4, wherein the transfer pattern further extends from the side wall of the lower layer and between the lower layer and the upper layer.

8. A flip-flop footwear article (200) according to claim 6 or claim 7, wherein the transfer pattern is a hydrographics immersion printed pattern, a thermally transferred printed pattern, or a rotary printing transferred pattern.

9. A method of providing an elongate foot engagement element (100) for a flip-flop footwear article (200) having a transfer pattern (110) applied thereto, said method including the steps of:
(i) providing an elongate foot engagement element (100) having an outer surface wherein said elongate foot engagement element (100) is formed from an elastic polymeric or rubberized material and comprises two elongate portions (102, 104) each having a first surface (103, 105) for engagement with at least the upper surface of the foot of a user, and a second surface (107, 109) opposed to the first surface (103, 105), wherein the two elongate portions (102, 104) have a first end each of which converge at a first end of the foot engagement element (100), and wherein the elongate portions (102, 104) diverge at a second end thereof, wherein said foot engagement element (100) is formed from a polymeric material having elastic properties and is deformable and flexurally resilient so as to return to an initial state upon being flexed, wherein the foot engagement element (100) is a shape-formed element having been formed in the shape of the foot engagement element (100) and has said elastic properties; and
(ii) applying a pattern (110) to said outer surface of said foot engagement element (100) by way of a hydrographics immersion printing process, wherein the transfer pattern (110) is a hydrographics immersion pattern (110) covering the entire foot engagement element (100).

10. A method according to Claim 9, wherein the foot engagement element (100) is formed by a molding process, where the molding process is an injection molding process, a compression molding process, a cast molding process, a transfer molding process; or wherein the foot engagement element (100) is formed by an additive manufacturing process, a three-dimensional (3D) printing process, a fused filament fabrication process, a Continuous Liquid Interface Production (CLIP) process, or a Digital Light Synthesised (DLS) process.

## Patentansprüche

1. Längliches Fußfixierungselement (100) für einen Flip-Flop-Schuhartikel (200), wobei das Fußfixierungselement eine Außenfläche mit einem darauf aufgebrachten Übertragungsmuster (110) aufweist, wobei das Fußfixierungselement (100) umfasst:
zwei längliche Abschnitte (102, 104), die jeweils eine erste Fläche (103, 105) zum Zusammenwirken mit mindestens der oberen Fläche (107, 109) des Fußes eines Benutzers und eine zweite Fläche gegenüber der ersten Fläche aufweisen, und wobei die zwei länglichen Abschnitte (102, 104) jeweils ein erstes Ende aufweisen, das an einem ersten Ende des Fußfixierungselements (100) zusammenläuft, und wobei die länglichen Abschnitte (102, 104) an einem zweiten Ende davon auseinanderlaufen;
wobei das Fußfixierungselement (100) aus einem elastischen polymeren oder gummierten Material mit elastischen Eigenschaften gebildet ist und verformbar und biegeelastisch ist, sodass es in einen Anfangszustand zurückkehrt, wenn es gebogen wird, wobei das Fußfixierungselement (100) ein formgebildetes Element ist, das in der Form des Fußfixierungselements (100) ausgebildet ist und die elastischen Eigenschaften aufweist; und
wobei das Übertragungsmuster (110) ein hydrografisches Tauchmuster (110) ist, das das gesamte Fußfixierungselement (100) bedeckt.

2. Längliches Fußfixierungselement (100) gemäß Anspruch 1, ferner umfassend einen Verlängerungsabschnitt (112), der sich von den ersten Enden der länglichen Abschnitte (102, 104) erstreckt und einen Befestigungsabschnitt (114) darauf zum Eingriff mit einem Sohlenelement (210) eines Schuhartikels (200) aufweist, und wobei die zweiten Enden der länglichen Abschnitte (102, 104) jeweils einen Befestigungsabschnitt (115, 116) darauf zum Befestigen mit einem Sohlenelement (210) eines Schuhartikels (200) aufweisen, wobei der Verlängerungsabschnitt (112) so bemessen ist, dass er zwischen der großen Zehe und der zweiten Zehe eines Benutzers verläuft, und wobei die länglichen Abschnitte (102, 104) so bemessen sind, dass sie sich von ihren ersten Enden und über die obere Fläche des Fußes eines Benutzers in eine Richtung zur Rückseite des Fußes des Benutzers erstrecken, und wobei sich ein erster und ein zweiter länglicher Abschnitt (102, 104) zu den seitlichen und zur mittleren Seite des Fußes des Benutzers erstrecken.

3. Längliches Fußfixierungselement (100) gemäß Anspruch 1 oder Anspruch 2, wobei das Fußfixierungselement aus einem elastischen Material einschließlich eines Gummis oder einer Gummimischung, eines Elastomers, eines elastischen Polymers, polymerer Harze oder dergleichen gebildet ist.

4. Flip-Flop-Schuhartikel (200), umfassend ein längliches Fußfixierungselement (100) eines Schuhartikels (200) gemäß einem der Ansprüche 1 bis 3 und ein längliches Sohlenelement (210) eines Flip-Flops.

5. Flip-Flop-Schuhartikel (200) gemäß Anspruch 4, wobei das längliche Sohlenelement (811) eine obere Fläche, eine untere Fläche (815), eine obere Schicht (812), die für den direkten Kontakt und die Wechselwirkung mit mindestens einem Teil der Unterseite des Fußes des Benutzers vorgesehen ist und aus einem ersten Polymermaterial mit einer ersten Dichte gebildet ist und eine untere Schicht (813) enthält, die eine Seitenwand (814) aufweist und im Wesentlichen die gesamte untere Fläche (815) bildet und für den direkten Kontakt und die Wechselwirkung mit einer Oberfläche bestimmt ist und aus einem zweiten Polymermaterial mit einer zweiten Dichte gebildet ist, wobei das erste Polymermaterial in einer Gelform bereitgestellt wird und das zweite Polymermaterial in einer expandierten Form bereitgestellt wird, wobei die erste Dichte größer als die zweite Dichte ist, und wobei das erste Polymermaterial und das zweite Polymermaterial so ausgewählt und die obere Schicht (812) und die untere Schicht (813) so bemessen und angeordnet sind, dass das Sohlenelement (811) im Wesentlichen flexibel und elastisch ist, um im Gebrauch und beim Gehen des Benutzers eine wesentliche Biegung des Sohlenelements (811) in Längsrichtung und eine Rückwärtsbewegung zu ermöglichen; und wobei sich der Abschnitt der oberen Schicht (812) mindestens bis zur oberen Fläche des Sohlenelements (811) erstreckt und das erste Polymermaterial und das zweite Polymermaterial so ausgewählt sind und die obere Schicht (812) und die untere Schicht (813) so bemessen und angeordnet sind, dass die obere Schicht (812) für eine Dämpfung der auf den Fuß des Benutzers bei Kontakt mit der Fläche ausgeübten Belastung sorgt.

6. Flip-Flop-Schuhartikel (200) gemäß Anspruch 5, mit einem Übertragungsmuster, das sich um die Seitenwand der unteren Schicht herum und über die untere Oberfläche des Sohlenelements erstreckt.

7. Flip-Flop-Schuhartikel (200) gemäß Anspruch 4, wobei sich das Übertragungsmuster ferner von der Seitenwand der unteren Schicht und zwischen der unteren Schicht und der oberen Schicht erstreckt.

8. Flip-Flop-Schuhartikel (200) gemäß Anspruch 6 oder Anspruch 7, wobei das Übertragungsmuster ein hydrografisches Tauchdruckmuster, ein thermisch übertragenes Druckmuster oder ein durch Rotationsdruck übertragenes Muster ist.

9. Verfahren zum Bereitstellen eines länglichen Fußfixierungselements (100) für einen Flip-Flop-Schuhartikel (200) mit einem darauf aufgebrachten Übertragungsmuster (110), wobei das Verfahren die folgenden Schritte umfasst:
(i) Bereitstellen eines länglichen Fußfixierungselements (100) mit einer Außenfläche, wobei das längliche Fußfixierungselement (100) aus einem elastischen polymeren oder gummierten Material gebildet ist und zwei längliche Abschnitte (102, 104) umfasst, die jeweils eine erste Fläche (103, 105) zum Zusammenwirken mit mindestens der oberen Fläche des Fußes eines Benutzers und eine zweite Fläche (107, 109) gegenüber der ersten Fläche (103, 105) aufweisen, wobei die zwei länglichen Abschnitte (102, 104) ein erstes Ende aufweisen, die jeweils an einem ersten Ende des Fußfixierungselements (100) zusammenlaufen, wobei das Fußfixierungselement (100) aus einem Polymermaterial mit elastischen Eigenschaften gebildet ist und verformbar und biegeelastisch ist, sodass es in einen Anfangszustand zurückkehrt, wenn es gebogen wird, wobei das Fußfixierungselement (100) ein formgebildetes Element ist, das in der Form des Fußfixierungselements (100) ausgebildet ist und die elastischen Eigenschaften aufweist; und
(ii) Aufbringen eines Musters (110) auf die Außenfläche des Fußfixierungselements (100) mittels eines hydrografischen Tauchdruckverfahrens, wobei das Übertragungsmuster (110) ein hydrografisches Tauchmuster (110) ist, das das gesamte Fußfixierungselement (100) bedeckt.

10. Verfahren gemäß Anspruch 9, wobei das Fußfixierungselement (100) durch einen Formgebungsprozess gebildet wird, wobei der Formgebungsprozess ein Spritzgießprozess, ein Formpressprozess, ein Gießprozess, ein Übertragungsformprozess ist; oder wobei das Fußfixierungselement (100) durch einen additiven Herstellungsprozess, einen dreidimensionalen (3D) Druckprozess, einen Schmelzschichtfertigungsprozess, einen kontinuierlichen Flüssigkeitsschnittstellenfertigungsprozess (*Continuous Liquid Interface Production* CLIP) oder ein Digital-Licht-Synthese-Prozess (*Digital Light Synthesis,* DLS) gebildet wird.

## Revendications

1. Élément allongé (100), destiné à entrer en prise avec le pied, pour un article chaussant de type tong (200), ledit élément destiné à entrer en prise avec le pied ayant une surface extérieure, avec un motif de transfert (110) appliqué sur celle-ci, ledit élément (100), destiné à entrer en prise avec le pied, comprenant :
deux parties allongées (102, 104) ayant chacune une première surface (103, 105) destinée à entrer en prise avec au moins la surface supérieure (107, 109) du pied d'un utilisateur, et une seconde surface opposée à la première surface, et dans lequel les deux parties allongées (102, 104) ont une première extrémité, dont chacune converge à une première extrémité de l'élément (100), destiné à entrer en prise avec le pied, et dans lequel les parties allongées (102, 104) divergent à une seconde extrémité de celles-ci ;
dans lequel ledit élément (100), destiné à entrer en prise avec le pied, est formé d'un matériau polymérique ou caoutchouté élastique ayant des propriétés élastiques et est déformable et résilient en flexion afin de retourner à un état initial lorsqu'il est fléchi, dans lequel l'élément (100), destiné à entrer en prise avec le pied, est un élément mis en forme ayant été mis en la forme de l'élément (100), destiné à entrer en prise avec le pied, et a lesdites propriétés élastiques ; et
dans lequel le motif de transfert (110) est un motif d'immersion hydrographique (110) couvrant l'élément entier (100), destiné à entrer en prise avec le pied.

2. Élément allongé (100), destiné à entrer en prise avec le pied, selon la revendication 1, comprenant en outre une partie d'extension (112) s'étendant depuis la première extrémités des parties allongées (102, 104) et ayant une partie d'entrée en prise (114), sur celle-ci, destinée à entrer en prise avec un organe semelle (210) d'un article chaussant (200), et les secondes extrémités des parties allongées (102, 104) ayant chacune une partie d'entrée en prise (115, 116), sur celles-ci, destinée à entrer en prise avec un organe semelle (210) d'un article chaussant (200), dans lequel la partie d'extension (112) est dimensionnée afin de passer entre le gros orteil et le second orteil d'un utilisateur, et dans lequel les parties allongées 102, 104) sont dimensionnées afin de s'étendre depuis les premières extrémités de celles-ci et par-dessus la surface supérieure du pied d'un utilisateur dans une direction vers l'arrière du pied de l'utilisateur, et les première et seconde parties allongées (102, 104) s'étendant vers les côtés latéral et médial du pied de l'utilisateur, respectivement.

3. Élément allongé (100), destiné à entrer en prise avec le pied, selon la revendication 1 ou la revendication 2, dans lequel l'élément destiné à entrer en prise avec le pied est formé d'un matériau élastique incluant un caoutchouc ou composé caoutchouc, un élastomère, polymère élastique, des résines polymériques, ou analogues.

4. Article chaussant de type tong (200), comprenant un élément allongé (100), destiné à entrer en prise avec le pied, d'un article chaussant (200) selon l'une quelconque des revendications 1 à 3, et un organe semelle allongé (210) d'un tong.

5. Article chaussant de type tong (200) selon la revendication 4, dans lequel l'organe semelle allongé (811) inclut une surface supérieure, une surface inférieure (815), une couche supérieure (812), étant pour le contact et l'interaction directs avec au moins une partie du dessous du pied de l'utilisateur et étant formée d'un premier matériau polymérique ayant une première densité, et une couche inférieure (813), ayant une paroi latérale (814) et formant sensiblement la surface inférieure entière (815) et étant pour le contact et l'interaction directs avec une surface et étant formée d'un second matériau polymérique ayant une seconde densité, dans lequel le premier matériau polymérique est prévu sous forme de gel et le second matériau polymérique est prévu sous forme expansée, moyennant quoi la première densité est supérieure à la seconde densité, et dans lequel le premier matériau polymérique et le second matériau polymérique sont sélectionnés et la couche supérieure (812) et la couche inférieure (813) sont dimensionnées et agencées de telle sorte que l'organe semelle (811) soit sensiblement flexible et élastique afin de permettre la flexion substantielle de l'organe semelle (811) longitudinalement et le retour, lorsqu'il est utilisé et durant l'ambulation de l'utilisateur ; et dans lequel ladite partie couche supérieure (812) s'étend au moins jusqu'à la surface supérieure de l'organe semelle (811), et le premier matériau polymérique et le second matériau polymérique sont sélectionnés et la couche supérieure (812) et la couche inférieure (813) sont dimensionnées et agencées de telle sorte que la couche supérieure (812) permette l'amortissement d'une charge transmise au pied de l'utilisateur lors du contact avec la surface.

6. Article chaussant de type tong (200) selon la revendication 5, ayant un motif de transfert qui s'étend autour de la paroi latérale de la couche inférieure et s'étend sur la surface inférieure de l'organe semelle.

7. Article chaussant de type tong (200) selon la revendication 4, dans lequel le motif de transfert en outre s'étend depuis la paroi latérale de la couche inférieure et entre la couche inférieure et la couche supérieure.

8. Article chaussant de type tong (200) selon la revendication 6 ou la revendication 7, dans lequel le motif de transfert est un motif imprimé par immersion hydrographique, un motif imprimé transféré thermiquement, ou un motif transféré par impression rotative.

9. Procédé pour fournir un élément allongé (100), destiné à entrer en prise avec le pied, pour un article chaussant de type tong (200) ayant un motif de transfert (110) appliqué sur celui-ci, ledit procédé incluant les étapes de :
(i) la fourniture d'un élément allongé (100), destiné à entrer en prise avec le pied, ayant une surface extérieure, dans lequel ledit élément allongé (100), destiné à entrer en prise avec le pied, est formé d'un matériau polymérique ou caoutchouté élastique et comprend deux parties allongées (102, 104) ayant chacune une première surface (103, 105) destinée à entrer en prise avec au moins la surface supérieure du pied d'un utilisateur, et une seconde surface (107, 109) opposée à la première surface (103, 105), dans lequel les deux parties allongées (102, 104) ont une première extrémité dont chacune converge à une première extrémité de l'élément (100), destiné à entrer en prise avec le pied, et dans lequel les parties allongées (102, 104) divergent à une seconde extrémité de celles-ci, dans lequel ledit élément (100), destiné à entrer en prise avec le pied, est formé d'un matériau polymérique ayant des propriétés élastiques et est déformable et résilient en flexion afin de retourner à un état initial lorsqu'il est fléchi, dans lequel l'élément (100), destiné à entrer en prise avec le pied, est un élément mis en forme ayant été mis en la forme de l'élément (100), destiné à entrer en prise avec le pied, et a lesdites propriétés élastiques ; et
(ii) l'application d'un motif (110) sur ladite surface extérieure dudit élément (100), destiné à entrer en prise avec le pied, par l'intermédiaire d'un processeur d'impression par immersion hydrographique, dans lequel le motif de transfert (110) est un motif d'immersion hydrographique (110) couvrant l'élément entier (100), destiné à entrer en prise avec le pied.

10. Procédé selon la revendication 9, dans lequel l'élément (100), destiné à entrer en prise avec le pied, est formé par un processus de moulage, où le processus de moulage est un processus de moulage par injection, un processus de moulage par compression, un processus de moulage par coulée, un processus de moulage par transfert ; ou dans lequel l'élément (100), destiné à entrer en prise avec le pied, est formé par un processus de fabrication additive, un processus d'impression tridimensionnelle (3D), un processus par dépôt de filament en fusion, un processus CLIP (« Continuous Liquid Interface Production »), ou processus DLS (« Digital Light Synthesis »).
